# EUROPÄISCHE PATENTSCHRIFT

(11) **EP 0 883 814 B1**
(45) Veröffentlichungstag und Bekanntmachung des Hinweises auf die Patenterteilung: **10.04.2002**
(21) Anmeldenummer: 97902332.2
(22) Anmeldetag: 06.02.1997
(51) Int. Cl.: G01P 5/00, G01P 13/02, G05B 19/401

(54) **EINRICHTUNG ZUR POSITIONIERUNG EINER MESSSONDE**
DEVICE FOR POSITIONING A MEASURING SENSOR
DISPOSITIF DE POSITIONNEMENT D'UNE SONDE DE MESURE

(30) Priorität: 23.02.1996 DE 19606794
(43) Veröffentlichungstag der Anmeldung: 16.12.1998
(73) Patentinhaber: MTU Aero Engines GmbH, 80995 München (DE)
(72) Erfinder: KERNER, Leander, D-81673 München (DE)
(74) Vertreter: Einsele, Rolf W.
(86) Internationale Anmeldenummer: EP9700515
(87) Internationale Veröffentlichungsnummer: WO9731270

(56) Entgegenhaltungen:
- EP-A- 0 618 521
- EXPERIMENTS IN FLUIDS, Bd. 14, Nr. 6, 1.Januar 1993, Seiten 475-476, XP000384915 LAU S ET AL: "A COMPUTER OPERATED TRAVERSING GEAR FOR THREE-DIMENSIONAL FLOW SURVEYS IN CHANNELS"

## Beschreibung

Zu Testzwecken einzelner Komponenten eines Turbotriebwerks, z. B. eines Verdichters, einer Turbine oder der Brennkammer werden Meßsonden bzw. Strömungsmeßsonden eingesetzt; es handelt sich u. a. um Druck-, Temperatur-, Anemometer- oder Richtungsmeßsonden. Die Meßung erfolgt in einer Druckluft- oder Heißgasströmung entweder direkt am Triebwerk oder z. B. an einem zylinderrohrartigen Prüfling, mit dem auf einem Prüfstand existierende oder zu verändernde Prozeßzustände - oder -parameter simuliert werden.

Dabei benötigen beispielhaft genannte Meßsonden oftmals Sensoren oder Meßfühler, von denen beispielsweise mehrere mit Abstand nebeneinander in einer gemeinsamen Ebene und quer zur Sondenachse abgewinkelt angeordnet sind; auch z. B. die Anordnung mindestens eines Sensors oder Meßfühlers an einem Arm oder innerhalb eines Rohrteils der Sonde - quer von der Sondenachse auskragend - ist möglich. Dabei ist es schwierig, eine derartige Sonde exakt und rasch auf die örtliche Meßposition einzujustieren, insbesondere im Rahmen einer Nullpunktabgleichung relativ zur Längsachse des Testrohrs oder -Gehäuses; letzteres insbesondere so, daß auch ein quer von der Sondenachse abgewinkelter Meßsensor oder -kopf zentrisch exakt mit der Längsachse des Testkörpers oder -gehäuses zusammenfällt, und zwar so, daß er sich in Meßposition mit Radialabstand exakt parallel zu dieser Längsachse erstreckt.

Untersucht wurde eine Einrichtung, bei der am äußeren Umfang eines zylindrischen Testrohrs eine Halterung für eine Strömungsmeßsonde fixierbar ist. An der Halterung ist die Meßsonde in Abstimmung auf den Meßort in Richtung ihrer Längsachse verschiebbar und um die Längsachse verdrehbar angeordnet. Der untersuchte Fall sieht eine mechanisch-optische Nullpunktausrichtung vor. Dabei wird eine Lichtquelle außen und umfänglich verdrehbar mit einem Richtkopf der Meßsonde verbunden. Mittels eines Prismas wird am äußeren Umfang des Testrohrs ein Stativ mit einer äußeren planparallelen Platte in axialem Abstand zur Lichtquelle am Lichtkopf angeordnet. Durch mehrmaliges Umsetzen der Lichtquelle (Parallaxenmethode) relativ zu drei Markierungen der Planplatte soll die korrekte Sondenposition (Nullpunktjustierung) ermittelt werden.

Neben zeitlich langen und aufwendigen Einstell- und Justiervorgängen ist bei der untersuchten Einrichtung die Fehlermöglichkeit besonders bei relativ großen Rohrradien groß und überwiegend in der manuellen Handhabbarkeit begründet. Hierzu sei insbesondere auf den Einstellwinkelfehler im Wege der Richtstrecke zwischen Lichtquelle (Sonde) und Planplatte (Stativ) verwiesen, basierend auf jeweils umfänglichen relativen Montagemeßfehlem der Sonde und des Stativs gegenüber der gemeinsamen Längsachse des Testkörpers.

Justiervorgänge der beschriebenen Art sind auf dem entsprechenden Fachgebiet allgemein bekannt.

Bei schon vorgeschlagenen Verstellgeräten leidet die Verstellgenauigkeit infolge der Verwendung von Zahnrädergetrieben oder Zahnriemen. Ferner ist eine vom Testraum z. B. thermisch geschützte Bedienung praktisch unmöglich bzw. müssen Testläufe als Folge häufiger manueller Eingriffe oftmals unterbrochen werden.

Ein Verstellmechanismus ist beispielsweise im Artikel "A computer operated traversing gear..." (im Recherchenbericht zitiert) beschrieben. Die Sonde wird durch drei Rotationbewegungen und eine lineare Bensegung ausgerichtet.

Der Erfindung liegt die Aufgabe zugrunde, eine Einrichtung anzugeben, mit der eine Strömungsmeßsonde der angegebenen Art bei geringem Bau- und Rüstaufwand zeitlich rasch und genau auf die benötigte Meßposition einstellbar ist.

Die gestellte Aufgabe ist durch Patentanspruch 1 erfindungsgemäß gelöst.

Die Erfindung ermöglicht eine vollautomatische Sondenverstellung einschließlich einfachst durchführbarer Null-Justierung (mechanisch Null).

Insbesondere ist eine von der herrschenden Testraumatmosphäre unbehinderte Komplettbedienung im Rahmen des im Bedienraum installierten, mit dem Rechner kommunizierenden Steuergeräts möglich, nachdem die betreffenden Referenzkabel mit dem Verstellgerät für die Sonde verbunden worden sind.

In Verwendung einer Lichtschranke, insbesondere in Ausbildung als Lichtkoppler können vergleichsweise einfach und genau die für die Sonden-Null-Justierung verwendeten Grenzpositionen bzw. Pendelgrenzlagen dargestellt bzw. in die benötigten Logiksignale umgewandelt werden. Zwecks letzterem können wesentliche Bestandteile bzw. Bausteine einer Schaltung in das Gehäuse des Justiergeräts integriert sein. Ein einfacher Referenzkabelanschluß - Justiergerät, Schaltung, Verstellgerät (Sonde) - macht die Null-Justierung funktionsfähig.

Das Justiergerät selbst ist einfach und wartungsfreundlich aufgebaut und die integrierten Bausteine der Schaltung sind leicht zugänglich und im übrigen durch den lösbaren Gehäusedeckel umgebungsdicht abschirmbar.

Eine optimal umgebungsdichte sowie wartungsfreundliche Bauweise des Verstellgeräts ist ebenfalls ermöglicht. Dieses schließt zugleich eine Gehäusebauweise ein, mit der voneinander getrennte oder gleichzeitige motorische Verstellungen im Wege spielloser Direktantriebe vergleichsweise einfach in das Gerätekonzept integriert sind.

Im Rahmen der hohlzylindrischen koaxialen Gerätebauweisen (Stellmotoren, Rotor bzw. Rotoren, Translationsantrieb- und -verstellung) ist eine unbehinderte Sondenverstellung und Kabelführung (rohrintegral) möglich. Die Sonde kann von oben oder unten in das Verstellgerät leicht eingesetzt werden.

Eine für das Verstellgerät gewichtlich leichte und zugleich feste und formsteife Bauweise läßt sich über Leichtbauwerkstoffe in die Wege leiten.

Die Bauweise der Stellmotoren ermöglicht genau koordinierbare Sondenverstellungen, insbesondere über die Incrementalencoder im Rahmen einer äußerst präzisen Winkelverstellfunktion über die Vorgaben aus den in Steuerimpulse umgesetzten Grenzlagen (Logiksignale) bzw. aus der in dem Rechner implantierten Software für die rotatorische oder lineare translatorische Sondenverstellung.

Gemäß der Erfindung wird jeweils anteilig eine praktikable und vergleichsweise einfache Sondenantriebs- bzw. Verstellkinematik geschaffen, um die gleichzeitige oder voneinander getrennte rotatorische bzw. translatorische Hubverstellung zu ermöglichen. Über den Direktantrieb des zweiten Stellmotors auf die Spindelmutter ergibt sich eine vergleichsweise geringe Gesamtbauhöhe des Verstellgeräts.

Eine einfache und genaue Sondenfixierung wird ebenfalls ermöglicht.

Weiters ist eine örtlich gezielte, hochintensive Gerätefußkühlung möglich, um eine Testanwendung bei vergleichsweise hohen Temperaturen des Fluids, z. B. Heißgas, zu beherrschen.

Eine sehr praktikable Verstellgeräteeinjustierung relativ zur Befestigungsstelle ist ebenfalls möglich.

Eine optimale Verstellgeräte- und Sondenpositionierung - umfänglich relativ zur Achse des Testkörpers - ist durch weitere Ausbildungen definiert.

Die Erfindung kann direkt an einem Gehäuse eines Turbotriebwerks praktiziert werden; mit anderen Worten: Es soll die Erfindung nicht auf den Grundbegriff "Testrohr" oder "Testkörper" eingeschränkt werden.

Anhand der Zeichnungen sind Ausführungsbeispiele der Erfindung erläutert, und zwar im Rahmen des Grundgedankens sowie weiterer vorteilhafter Ausgestaltungen, die auch die Ansprüche 2 bis 5 einschließen; es zeigen:
- Fig. 1: eine Perspektivdarstellung eines Testrohrs unter Zurodnung des Verstellgeräts der Sonde mit oben außen seitlich auskragendem Justiergerät, jeweils schematisch verkörpert,
- Fig. 2: eine Frontalansicht gemäß Blickrichtung X aus Fig. 1, wobei das Testrohr unten örtlich abgebrochen gezeichnet ist,
- Fig. 2a: das schematisch dargestellte Gesamtkonzept der Einrichtung mit Anordnung des Steuergeräts und des Rechners im Bedienraum, örtlich durch eine Wand abgeschirmt vom Testraum, in dem das Testrohr unten abgebrochen und von der Seite gesehen, dargestellt ist, und mit Signalschaltung sowie jeweiligem Referenzkabelanschluß an den Ge rätefuß des Verstellgeräts mit dem Justiergerät,
- Fig. 3: eine schematisch oben offene Ansicht des Justiergeräts in Blickrichtung B der Fig. 2 unter Verdeutlichung der relativen Null-Position und eines Geräte- und Sondenanstellwinkelfehlers α relativ zur Testrohrachse L und
- Fig. 4: eine Seitenansicht des Sondenverstellgeräts unter schematischer Verdeutlichung der jeweiligen Stellmotore sowie des sinngemäß zugeordneten rotatiorischen bzw. linear translatorischen Verstellantriebes, letzterer u.a. über die Spindel-Mutter-Anordnung mit einem SondenHubrohr verdeutlicht.

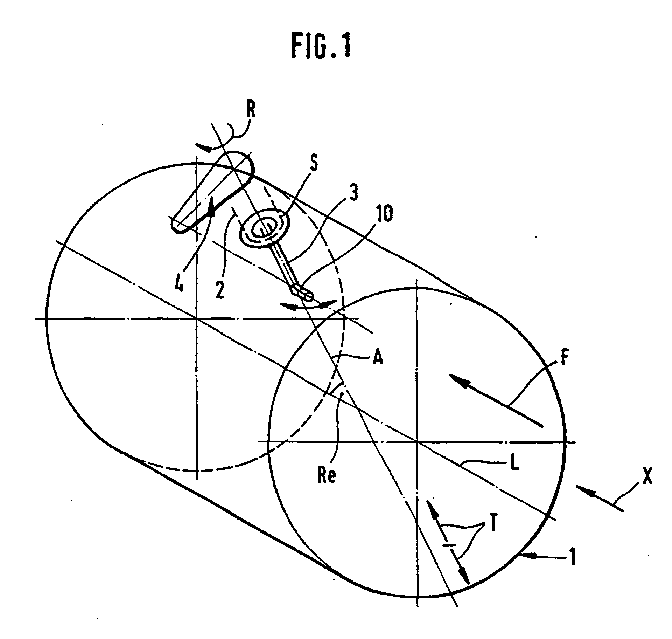

Die Erfindung kann z. B. an einem zylindrischen Testrohr 1 mit gerader Längsachse L durchgeführt werden (Fig. 1). Es ist ein Sondenverstellgerät 2 vorgesehen, welches an einer vorbereiteten Umfangsstelle S flanschartig mit dem Testrohr 1 verbunden wird. Im Detail wird das Sondenverstellgerät 2 später ausführlicher erläutert. In koaxialer Anordnung nimmt das Sondenverstellgerät 2 eine Strömungsmeßsonde 3 auf. Das Sondenverstellgerät 2 enthält geeignete Antriebsmittel (u.a. Motore, Getriebe, Gewinderollenspindel, Führungsschlitten), um die Meßsonde 3 einer translatorischen Hubbewegung T in Richtung ihrer Längsachse A und/oder einer rotatorischen Bewegung R um ihre Längsachse A zu unterwerfen.

Um die Sonde 3 translatorisch (T) bzw. rotatorisch (R) in Richtung auf die geforderte Meßposition - zwischen Innenwandumfang und Längsachse L des Testrohrs 1 - zu verstellen, ist eine später in Einzelheiten näher verdeutlichte Steuereinrichtung vorgesehen. Bevor dieser Steuervorgang ausgelöst wird, soll eine Nullpunkt-Korrektur bzw. -justierung der Sonde 3 durchgeführt werden.

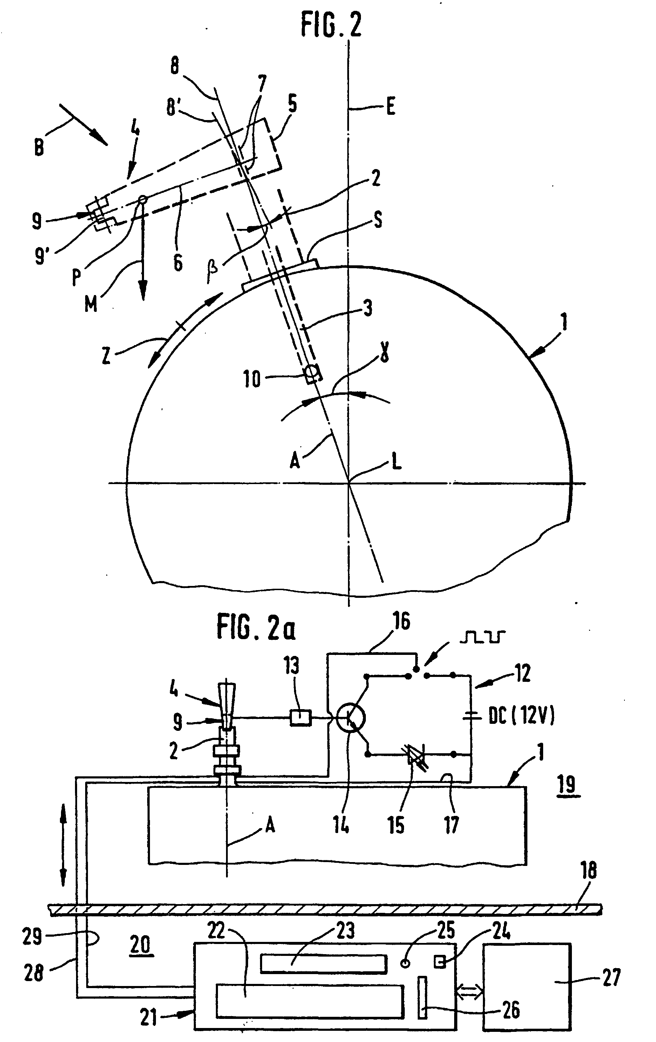

Hierzu sieht die Erfindung ein zunächst gemäß Fig. 1, 2 und 3 schematisch repräsentiertes pendelartiges Justiergerät 4 vor. Dieses besteht aus einem sich hier - von rechts nach links - gleichmäßig keilförmig verjüngenden Gehäuse 5 (Fig. 2), in dem ein Pendel 6 an Lagerstellen 7 um eine Drehachse 8 verschwenkbar ist. Längs der unteren geradlinigen Gehäusefläche ist das Justiergerät 4 in Querrichtung von der Achse A auskragend über einen Steckaufsatz, unter mitnahmebeweglicher Flächenkalibrierung, mit dem äußeren Ende bzw. einem Richtkopf der Sonde 3 verbunden. Es könnte die Drehachse 8' des Pendels 6 die gemeinsame Längsachse A der Sonde 3 und des Verstellgeräts 2 unter einem Winkel β von z. B. 10° schneiden. Gemäß Fig. 2 fällt z. B. die Position der Pendeldrehachse 8 mit der Längsachse A zusammen, die mithin die Funktion eines sogenannten "Scheinlots" einnimmt, wenn man sich vorstellt, daß die gezeigte Längsmittelebene E lotrecht verläuft. Mit Ausnahme der durch die Ebene E definierten "Toplagen" kann bei dieser Anordnung das pendelartige Justiergerät 4 in einem beliebigen Montageanstellwinkel γ der Längsachse A zur Ebene E über dem Rohrumfang plaziert werden.

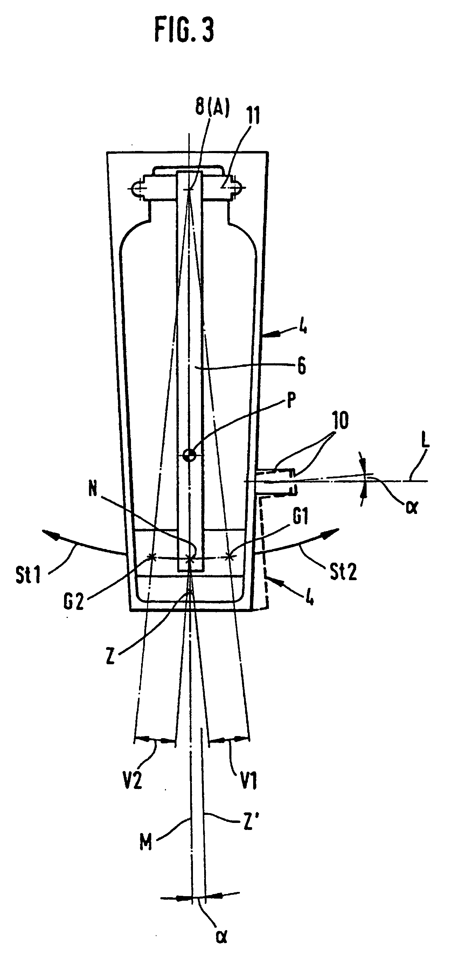

Am in Fig. 2 (links) bzw. in Fig. 3 unten keilförmig verjüngt zulaufenden einen Ende bildet das Justiergerät 4 an seinem Gehäuse 5 mindestens eine Lichtschranke 9 aus, in deren einseitig offenen Schlitz 9' das eine freie Ende des Pendels 6 berührungslos hineinragt. In spezieller Durchführbarkeit der Erfindung könnte diese Lichtschranke 9 als "Lichtkoppler" umschrieben werden. Ferner kennzeichnet in Fig. 2 und 3 die Position P den nach außen verschobenen Schwerpunkt des Pendels 6 relativ zur resultierenden Hebelmasse M.

Nach Fig. 1, 2 und 3 weist die Meßsonde 3 einen quer von der Längsachse A abgewinkelten Sondenkopf 10 mit Meßsensor auf, der imRahmen der angestrebten automatischen Nullpunktjustierung exakt parallel zum Verlauf der Längsachse L des Testrohrs 1 auszurichten wäre. Hierzu geht man davon aus, daß in der montierten und gezeigten Grundstellung die zentrale Achse des Sondenkopfes 10 unter einem konstant gehaltenen Winkel von 90° um die Achse A gegenüber der relativen Längsmitte des Justiergeräts 4 verdreht ist.

Mit ausgezogenen Konturen (Verstellgerät 4, Sondenkopf 10) repräsentiert Fig. 3 die angestrebte absolute Null-Lage, in der der Sondenkopf 10 genau parallel auf den Verlauf der Längsachse L des Testrohrs 1 ausgerichtet ist. Ferner geht man davon aus, daß die erwähnte Längsachse A gemäß Perspektivdarstellung nach Fig. 1 die Längsachse des Testrohrs 1 unter einem rechten Winkel Re schneidet. Gemäß gezeichneter absoluter Null-Lage (Fig. 3) ist das Justiergerät 4 mit seinem Gehäuse 5 in längsmittiger Position Z genau parallel auf die lotrechte Pendelposition N ausgerichtet, die sich linear nach unten verlängert in M fortsetzt.

Position 11 bezeichnet in Fig. 3 das eine von mehreren jeweils außen mit dem Gehäuse 5 des Justiergeräts 4 verschraubten Brückenstücken für die Ausbildung der Drehlagerung 7 (Fig. 2) des Pendels 6. Um die Achse A ist das Justiergerät 4 mit der Sonde zwischen den beiden markierten Grenzpositionen G1, G2 verschwenkbar. In der für Fig. 3 repräsentativen Null-Punktlage (N, M auf Z) fällt also der maximale Winkelverstellweg zwischen den Grenzlagen G1, G2 in zwei gleiche halbe Winkelverstellwege V1 bzw. V2, um die das Pendel 6 bei entsprechender Rechts- bzw. Linksdrehung des Gerätes 4 nebst Sonde 3 (10) in die Grenzlagen G1 bzw. G2 fiktiv "auswandern" würde.

Relativ zur entsprechenden Verstellbewegung des Justiergerätes 4 nebst Lichtschranke 9 und Sonde 3 werden in den erreichten Pendelgrenzpositionen G1 bzw. G2 vom dabei unbehindert auf einen Lichtdedektor bzw. auf eine Fotozelle auftreffenden Lichtbündel Lichtsignale erzeugt, die den tatsächlich zurückgelegten Winkelverstellweg definieren sowie jeweils für sich in maschinelle Stoppsignale umsetzbar sind. Die optisch empfangenen Lichtsignale können z. B. zwecks elektromagnetischer Maschinenstoppung über eine Triggereinheit in elektrische Steuersignale umgewandelt werden. Das Pendel 6 kann im Bereich des freien Endes einen zur axialen Endseite hin offenen, axial mittigen Schlitz aufweisen, durch den das Lichtbündel der Lichtschranke 9 hindurchtritt und in einer Grenzposition G1 bzw. G2 eines Lichtdetektors den relativ verschobenen Kreisrand (Fotozelle) auf der Unterseite des Schlitzes 9' beleuchtet. Es kann auch eine auf die Grenzpositionen G1 bzw. G2 abgestimmte Doppel-Lichtschranke vorgesehen sein.

Eine schematisch dargestellte und korrekturbedürftige Postition des Sondenkopfes 10 nebst Sensors und Justiergeräts 4 (unten rechts) ist gestrichelt verkörpert, wobei die Achse des Sondenkopfes 10 unter einen Winkel α gegenüber der Längsachse L des Testkörpers 1 verdreht ist, so daß sich eine entsprechende Winkelverstellabweichung α des Justiergeräts 4 nebst Sonde und Kopf 10 nach Z' gegenüber der lotrechten Pendelposition N, M' ergibt. In der Praxis wird der in Fig. 3 etwas übertrieben groß verkörperte Korrekturfehler (Winkel α) kleiner sein, so daß man zwecks automatischer Sondenjustierung von einer schon "annähernd" korrekten Position (mechanisch Null) ausgeht.

Nach dieser Vorjustierung auf annähernd mechanisch Null wird die Sondensteuereinrichtung eingeschaltet bzw. aktiviert. Gemäß Stellrichtung St1 wird hierauf das Justiergerät 4 nebst Sonde 3 und Kopf 10 z. B. nach rechts um die Längsachse A soweit verdreht, daß mit Erreichen der einen Pendelgrenzlage G1 ein verstellrelevantes erstes Lichtgrenzsignal erzeugt wird, durch welches die Geräteverstellung nach rechts gestoppt wird. Diese aus G1 resultierende Pendelgrenzlage wird von der für die Geräteverstellung verantwortlichen Computer-Software erfaßt, woraus ein Verstellbefehl resultiert, durch den das Justiergerät 4 nebst Sonde 3 und Kopf 10 zu einer Linksdrehung St2 um die Längsachse A soweit veranlaßt wird, daß in der anderen Pendelgrenzlage G2 ein zweites verstellrelevantes Lichtgrenzsignal die Geräteverstellung unterbricht. Der zurückgelegte Winkelverstellweg (G1 - G2) wird über die Computer-Software numerisch erfaßt und es wird der errechnete Winkelverstellweg mathematisch halbiert, woraufhin die Maschinensteuerung den Befehl erhält, das Justiergerät 4 nebst Sonde 3 (10) um diesen halbierten Winkelverstellwert gemäß V1 aus der gemäß St2 (Pendelgrenzlage G2) verschwenkten Position zurücklaufen zu lassen. Die dann erreichte Position des Justiergeräts 4 nebst Sonde 3 und Kopf 10 ist exakt mechanisch Null und der Antellwinkelfehler α ist korrigiert. Im Rahmen der numerischen Erfassung kann der Winkelverstellweg (G1 - G2) über die Steuerlogik eines elektrischen Rechners 27 (siehe auch Fig. 2a) - vor der Winkelhalbierung - in Winkelgrade umgerechnet werden.

Sofern erforderlich, könnte nun noch die Meßsonde 3 mit dem Sensorkopf 10 über das Verstellgerät 2 einer translatorischen Hubbewegung T (Fig. 1 und 2) unterworfen werden, um sie z. B. näher - als dargestellt - in Richtung auf die Innenwand des Testrohrs 1 zu verfahren.

Prinzipiell kann nach erwähnter Null-Korrektur der Versuchslauf bzw. Testvorgang (Druck-, Temperaturmessung oder dergleichen) beginnen.

Wie schon erwähnt, kann die Lichtschranke 9 insbesondere als sogenannter "Lichtkoppler" ausgebildet werden, um im Wege einer akkumulatorischen Stromquelle DC (Fig. 2a) nicht nur optisch empfangbare Logiksignale für die Justiergerätesteuerung bzw. -stoppung aus den jeweils empfangenen Lichtimpulsen in G1 bzw. G2, sondern auch demgemäße akustische Signale (Summer) wahrnehmbar zu machen. Eine elektrische Schaltung 12 hierfür enthält u. a. einen elektrischen Widerstand 13, einen Universaltransistor 14 und eine lichtemittierende Diode 15 (LED). Zumindest teilweise können Bestandteile dieser zur Signalverstärkung bzw. Logiksignalerzeugung dienenden Teile der Schaltung 12 bauteilmäßig in das Justiergerät 4 (Gehäuse 5) integriert sein. Es kann auch eine faseroptische Lichtschanke eingesetzt werden, wobei als Lichtquelle die Leuchtdiode (LED) dient. Als Detektor kann eine PIN-Photodiode eingesetzt werden. Diese Anordnung kann mit einem elektronischen Schwellenwertentscheider für die Auswertung kombiniert werden. Dieser vergleicht das vom Detektor kommende, stetig veränderliche Analogsignal mit einem voreingestellten Schwellenwert und erzeugt bei Über- oder Unterschreitung ein digitales Ausgangssignal.

Über die Leitungen 16, 17 ist die Schaltung 12 unter Verwendung sogenannter "Souriau-Stecker" an den betreffenden motorischen Steuerungsteil des Verstellgerätes 2 angeschlossen. Eine Wand 18 schirmt den Testraum 19 u. a. mit Testrohr 1, Verstellgerät 2, Justiergerät 4 nebst Schaltung 12 von einem Bedienraum 20 ab, in dem die elektronische Steuereinrichtung angeordnet ist. Diese besteht aus einem Steuergerät 21 mit einer Bedientastatur 22 (Keyboard), einem optischen Prozeßanzeigefeld 23 (Display), einer Einschalt-Taste 24, einer Einschalt-Signal-Licht-Anzeige 25 und einer "Memory-Taste" 26. Das Steuergerät 22 kommuniziert mit einem elektronischen Rechner 27 im Wege numerisch gespeicherter Programmdaten (Software) für die Sondensteuerung und -verstellung bzw. für die Errechnung bzw. Umrechnung (Signalempfang, Befehlsabgabe) zwecks Sonden-Null-Punkt-Korrektur. Gemäß Fig. 2a ist das mit dem Rechner 27 kommunizierende Steuergerät 21 über zwei Leitungen 28, 29 jeweils über Souriau-Stecker an betreffende motorische Steuerteile des Verstellgerätes 2 angeschlossen.

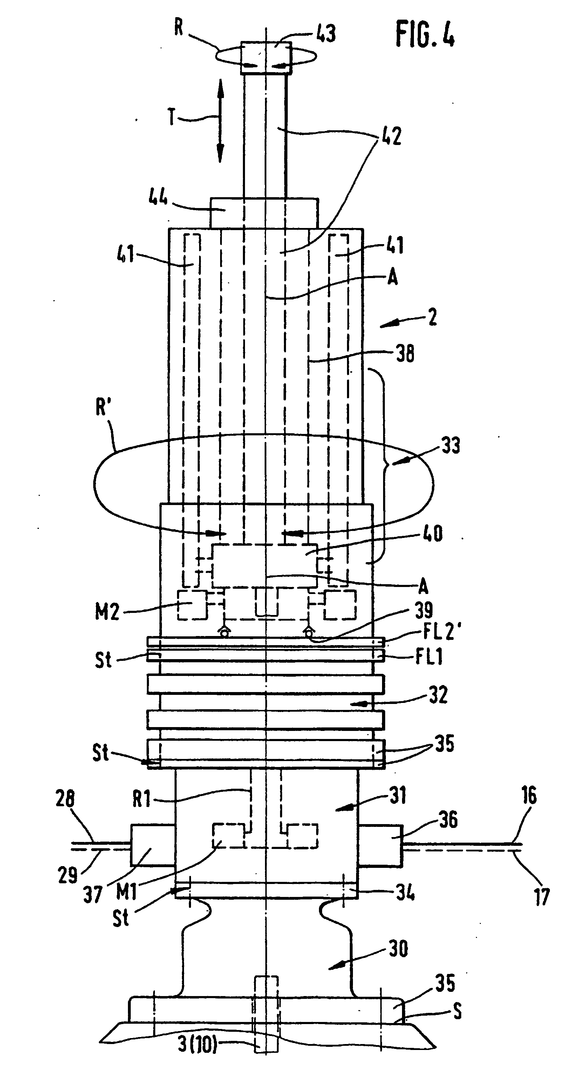

Fig. 4 veranschaulicht den Aufbau des Sondenverstellgeräts 2, das im wesentlichen, von unten nach oben gesehen, aus mehreren modulartig durch Schraubverbindungen St voneinander lösbaren und austauschbaren Gehäusen 30 bis 33 besteht, von denen mehrere Gehäuse 31, 32, 33 Antriebs- oder Verstelleinrichtungen für die Meßsonde 3 (10) enthalten und/oder ausbilden. Die Antriebs- und Verstelleinrichtungen sind in den der Längsachse A nächstliegenden Umfangsbereichen koaxial hohlzylindrisch ausgebildet, so daß eine unbehinderte Sondenführung bzw. -einfügung von oben oder unten am Verstellgerät 2 ermöglicht wird.

Die genannten Gehäuse können zumindest teilweise aus Titan bzw. einer Titanlegierung und/oder aus einem durch Fasern, insbesondere Glasfasern verstärkten Verbundwerkstoff gefertigt sein.

An Flanschen 34, 35, FL1, FL2, sind die Gehäuse 30, 31 bzw. 31, 32 bzw. 32, 33 durch Axialverschraubungen gemäß den Positionen St lösbar miteinander verbunden. Relativ zu einer zentralen Drehlagerung und zum Gehäuse 30 und mithin zum Verstellgerät 2 ist ein Flansch 35 durch eine lockerbare Klemme oder Schelle umfänglich verdreh- und justierbar, z. B. in Abstimmung auf Gewindebohrungen an der für die Gerätebefestigung dienenden Umfangsstelle S (siehe auch z. B. Fig. 1) des Testrohrs 1. Das Gehäuse 30 mit dem Befestigungsflansch 35 ist durch eine Luft- und/oder Wasserkühlung kühlbar, letzteres gegebenenfalls in Verbindung mit einem in die heiße Strömung (siehe F - Fig. 1) hineinragenden Rohrendteil, sofern dies im Hinblick auf die freie Sondenpositionierung im Testrohr 1 oder im Strömungskanal einer Turbine für zulässig und notwendig erachtet wird. Die Inbetriebnahme der Kühlung kann als Funktion einer gemessenen örtlichen Umgebungstemperatur über einen Thermoschalter oder über das Steuergerät 22 erfolgen. Für die genannte Kühlung kann das Fußgehäuseteil 30 Kühlkanäle aufweisen, durch die das Kühlfluid pumpengefördert zirkuliert, wobei das Kühlfluid über einen Wärmetauscher geführt werden kann, mit dem das durch Bauteilkühlung erwärmte Kühlfluid abgekühlt wird.

Die Positionen 36, 37 kennzeichnen am Gehäuse 31 befindliche Anschlußsockel, die feste Buchsen für die jeweiligen Souriau-Stecker aufweisen in Zuordnung zu den Leitungen bzw. Kabeln 16, 17 bzw. 28, 29 (siehe auch Fig. 2a).

Für einen koaxialen rotatorischen Sondenantrieb (Motor, Rotor) schließt das Gehäuse 31 einen Hohlwellen-Motor M1 (Fig. 4) ein; insbesondere kann es sich um einen Elektromotor in Ausbildung als Bürsten-Hohlwellenmotor handeln mit angeflanschtem Incrementalencoder zur Winkelsteuerung. Dieser Hohlwellen-Motor M1 wird über einen Rotor R1 mit einem sogenannten "Harmonic-Drive-Getriebe", in örtlich integraler Zuordnung zum Gehäuse 32, kraftschlüssig verbunden und ermöglicht hier z. B. eine vorteilhafte Untersetzung von i = 160. An der Abtriebsseite bzw. einer rotatorisch beweglichen Abtriebsplatte dieses Getriebes (Flansch FL1) kann die Verstellmechanik für die translatorische Hubbewegung T aufgeschraubt werden, wobei diese Verstellmechanik von dem äußeren Hubgehäuse 33 umschlossen ist. Über den Hohlwellenmotor M1 und das Getriebe in 32 erfolgt somit eine abtriebsseitige rotatorische Bewegung R' des äußeren Hubgehäuses 33 nebst Innenteilen im Interesse einer verstellrelevanten Sondenverstellung R um die Längsachse A.

Für eine lineare translatorische Hubbewegung T der Meßsonde 3 (10) kann ebenfalls ein Elektromotor in der Art eines Bürsten-Hohlwellen-Motors M2 verwendet werden, der koaxial zur Längsachse A an innerhalb des äußeren Hubgehäuses 33 liegenden Haltebauteilen angeordnet ist, die wiederum mit dem abtriebsseitigen Flansch FL1 lösbar verbunden sind. Auch an diesem zweiten Hohlwellenmotor M2 ist ein Incrementalencoder zur Winkelsteuerung angeflanscht.

Die jeweils benannten Incrementalencoder bestehen aus zwei Kreisplatten aus aluminium mit elektronischer Platine, Lichtschrankensattel und Glassteuerscheibe, zentrisch gefaßt in einer Aluminiumnabe. In Funktionslage sind die Platten mit der Platine durch die Stehbolzen justiert und verschraubt.

Der genannte zweite Hohlwellen-Motor M2 überträgt das Antriebsdrehmoment spielfrei und direkt z. B. auf eine koaxiale hohlzylindrische Gewinderollenspindel 38 mit je z. B. 1 mm Steigung. Dabei ist die Gewinderollenspindl 38 gegenüber innenliegenden Bauteilen des Hubgehäuses 33 durch die Kugellagerung frei drehbar angetrieben und abgestützt. Eine fußseitige Rillenkugellagerung am Flansch FL1(innen) ist mit 39 bezeichnet. Eine auf der Gewinderollenspindel 38 sitzende Kugelmutter 40 wird durch Präzisionskugelbüchsen linear geführt, z. B. längs Führungswellen 41, und bildet praktisch einen Führungsschlitten aus, der ein Hubrohr 42 mit dem axial äußeren Spannzangenkopf 43 trägt, über den die Sonde 3 (10) manuell am Hubrohr festlegbar ist. Ein äußerer Hubrohrlagerdeckel ist mit 44 bezeichnet und am Hubgehäuse 33 (oben) festlegbar. Die Umsetzung des Motordrehmoments in die lineare translatorische Hubbewegung T kann dabei so bemessen sein, daß bei einer vorgegebenen Axiallast von etwa 100 N im stromlosen Zustand Selbsthemmung vorliegt.

Bei einer alternativen Ausführung des Verstellgerätes 2 kann eine "hubrohrartige" lineare Spindelverstellung für die translatorische Sondenverstellung T durch die an innenliegenden Teilen des Hubgehäuses 33 kugelgelagerte Spindelmutter erzeugt werden. Hierdurch ergibt sich gegenüber der ersten Verstellalternative eine Reduzierung der Gerätebauhöhe bei gleichem vergleichsweise großem Hub. Weil beim Verstellgerät 2, weder in der einen noch in der anderen Ausführung keine Zahn- und Riemenantriebe verwendet werden, können die betreffenden Motordrehmomente äußerst spielarm übertragen werden.

Gemäß einer weiteren vorteilhaften Ausgestaltung ist es vorgesehen, daß das Verstellgerät 2 am Umfang des Testrohrs 1 in einer relativ zur Längsachse L desselben umfänglichen Bewegung Z - Fig. 2, verstellbar angeordnet ist, wobei diese Verstellung motorisch als Funktion des in den Rechner 27 implantierten Steuerprogramms über das Steuergerät 21 erfolgt.

Anstelle besagten Testrohrs 1 kann die Erfindung selbstverständlich bei sämtlichen geeigneten Gehäusekomponenten, z. B. für Turbinen oder Verdichter an Strahltriebwerken oder Gasturbinentriebwerken, vorteilhaft eingesetzt werden.

## Patentansprüche

1. Testrohr (1) mit einer Meßsonde (3), welche genau auf den Meßort und die Richtung der in dem Testrohr (1) herrschenden Fluidströmung (F) einstellbar ist und welche insbesondere einen quer von der Sondenachse (A) abgewinkelten Sensorkopf (10) aufweist, umfassend
I. ein Verstellgerät (2), mit dem die Meßsonde (3) in koaxialer Anordnung über einen ersten Stellmotor (M1) um ihre Achse (A), über einen zweiten Stellmotor (M2) in Richtung ihrer Achse (A) verstellbar ist, und welches mit einem Geräteflansch (35) an einer angepaßten äußeren Umfangsstelle (S) des Testrohrs (1) derart montiert ist, daß die gemeinsame Längsachse (A) des Verstellgeräts (2) und der Meßsonde (3) in ihrer Verlängerung die Testrohrachse (L) unter einem rechten Winkel (Re) schneidet und dabei gegenüber einer lotrechten Längsmittelebene (E) des Testrohrs (1) abgewinkelt (γ) ist,
II. ein mit der Meßsonde (3) drehfest gekoppeltes Justiergerät (4) mit einem drehbar gelagerten Pendel (6) zur Definition der Null-Position (N,M), d.h. der Sollposition und -richtung, der Meßsonde (3), wobei
a) das Justiergerät (4) bzw. sein Gehäuse (5) eine definierte Winkellage in Bezug auf die Sondenachse (A) aufweisen,
b) der Sensorkopf (10) eine definierte Winkellage in Bezug auf die Sondenachse (A) und das Justiergerät (4) aufweist, und
c) das Pendel (6) unter dem Einfluß der Schwerkraft eine Sollage in Bezug auf das Gehäuse (5) des Justiergerätes (4) einnimmt in der Mitte zwischen seinen Grenzlagen (G1, G2),
und
III. ein mit einem elektronischen Rechner (27) kommunizierendes Steuergerät (21) für die Sondenverstellung, das so ausgebildet ist, daß im Rahmen eines Justiervorganges die Meßsonde (3) um ihre eigene Achse (A) in beide Richtungen solange gedreht wird, bis ein jeweiliger Grenzpunkt (G1,G2) der Pendellage in Bezug auf das Justiergerät (4) erreicht ist, welcher einer definierten Abweichung des Pendels (6) von einer Mittel- oder Null-Lage (N,M) entspricht, und dessen Erreichen mit optischen Mitteln festgestellt wird, daß weiterhin der Rechner (27) den so ermittelten Winkelverstellweg zwischen den Grenzpunkten (G1,G2) mathematisch halbiert, und daß die Meßsonde (3) von einem Grenzpunkt (G1 oder G2) um den so berechneten Winkelwert um ihre Achse (A) gedreht wird, so daß sie eine Winkellage erreicht, in der das Pendel (6) an seiner Referenzposition (N,M) genau in der Mitte zwischen den Grenzpunkten (G1,G2) liegt, d.h., die Justiervorrichtung (4) in eine definierte Lage in Bezug auf eine lotrechte Bezugsebene gebracht wird, wodurch auch eine definierte Lage der Meßsonde (3) in Bezug auf die Längsachse (L) des Testrohrs (1) erreicht ist.

2. Testrohr nach Anspruch 1, **dadurch gekennzeichnet, daß** das Justiergerät (4) über einen Steckaufsatz an einem oben aus dem Verstellgerät (2) herausragenden Abschnitt oder Richtkopf der Meßsonde (3) drehfest festlegbar ist.

3. Testrohr nach Anspruch 1 oder 2, **dadurch gekennzeichnet, daß** die Drehachse (8) des Pendels (6) auf der gemeinsamen Längsachse (A) liegt oder relativ zu dieser Achse (A) unter einem Winkel (β) nach außen geneigt ist.

4. Testrohr nach einem oder mehreren der Ansprüche 1 bis 3, **dadurch gekennzeichnet, daß** der von der Meßsonde (3) quer abgewinkelte Sensorkopf (10) in einer um die Sondenachse (A) relativ zur Längsmitte des Justiergeräts (4) um 90° verdrehten Position angeordnet ist.

5. Testrohr nach einem oder mehreren der Ansprüche 1 bis 4, **dadurch gekennzeichnet, daß** das freie äußere Ende des Pendels (6) gegenüber einem zugeordneten Schlitz (9') am Gehäuse (5) des Justiergeräts (4) eine Lichtschranke (9), insbesondere als Lichtkoppler, ausbildet, wodurch relativ zu den Pendelgrenzlagen (G1,G2) Lichtsignale erzeugbar sind, die zu Logiksignalen verarbeitet werden.

6. Testrohr nach einem oder mehreren der Ansprüche 1 bis 5, **dadurch gekennzeichnet, daß** das Gehäuse (5) des Justiergerätes (4) in Richtung auf das die Lichtschranke (9) enthaltende Ende keilförmig, insbesondere in Draufsicht symmetrisch keilförmig verjüngt ausgebildet ist und einen lösbaren äußeren Gehäusedeckel sowie mit Abstand übereinanderliegende Brückenstücke (11) aufweist, an bzw. zwischen denen die Drehlagerung (7) für das Pendel (6) ausgebildet ist und die lösbar mit dem Gehäuse (5) verschraubt sind.

7. Testrohr nach Anspruch 5, **dadurch gekennzeichnet, daß** in Verbindung mit einem Lichtkoppler eine bauteilmäßig im wesentlichen in das Gehäuse (5) des Justiergeräts (4) integrierte Schaltung (12) vorgesehen ist, mit der die Pendelgrenzlagen (G 1 bzw. G2) in Logiksignale im wesentlichen über einen elektrischen Widerstand (13), einen Universaltransistor (14) und eine lichtemittierende Diode (15 - LED) - bei entsprechend angelegter Stromquelle (DC) - umsetzbar sind, wobei Referenzkabel (16,17) aus der Schaltung (12) über Souriau-Stecker und Steckbuchsen am Fußgehäuse (30) des Verstellgeräts (2) an die betreffende Motorsteuerung angeschlossen sind.

8. Testrohr nach einem oder mehreren der Ansprüche 1 bis 7, **dadurch gekennzeichnet, daß** weitere Referenzkabel (28,29) für die insbesondere translatorische bzw. rotatorische Bewegungssteuerung (T,R) der Meßsonde (3) vom Steuergerät (21) mit dem Rechner (27) aus einem abgeschirmten Bedienraum (20) zum Testraum (19) geführt und dort über Souriau-Stecker und Buchsen am Fußgehäuse (30) des Verstellgeräts (2) verankert sind, von dem aus entsprechende geräteseitige Zuleitungen zu den betreffenden Motorsteuerungen geführt sind.

9. Testrohr nach einem oder mehreren der Ansprüche 1 bis 8, **dadurch gekennzeichnet, daß** das Verstellgerät (2) aus mehreren modulartig durch Schraubverbindgen (St) voneinander lösbaren und austauschbaren Gehäusen (30,31,32,33) besteht, von denen ein Gehäuse (31), das auf dem Fußgehäuse (30) sitzt, im wesentlichen den Stellmotor (M1) für die rotatorische Sondenverstellung, ein weiteres Gehäuse (32) darauf im wesentlichen ein Drehzahlreduziergetriebe für den ersten Stellmotor (M1) einschließt, und worin mit einem abtriebsseitigen Flanschteil (FL1) des Reduziergetriebes ein Hubgehäuse (33) nebst inneren Teilen dieses Gehäuses verschraubt ist, worin das Hubgehäuse (33) nebst Innenteilen den zweiten Stellmotor (M2) sowie Verstellmittel für die translatorische Sondenverstellung (T) enthält und zumindest teilweise ausbildet.

10. Testrohr nach einem oder mehreren der Ansprüche 1 bis 9, **dadurch gekennzeichnet, daß** die Antriebs- und Verstellmittel in den der Meßsonde (3) nächstliegenden Umfangsbereichen des Verstellgeräts (2) für eine unbehinderte Sondenverstellung und Verdrehung sämtlich hohlzylindrisch ausgebildet sind.

11. Testrohr nach einem oder mehreren der Ansprüche 1 bis 10, **dadurch gekennzeichnet, daß** die Gehäuse des Verstellgeräts (2) jeweils zumindest teilweise aus einem festen Leichtbauwerkstoff, insbesondere aus Titan bzw. einer Titanlegierung oder einem durch Fasern, insbesondere Glasfasern verstärkten Verbundwerkstoff gefertigt sind.

12. Testrohr nach einem oder mehreren der Ansprüche 1 bis 11, **dadurch gekennzeichnet, daß** der erste und der zweite Stellmotor (M1,M2) jeweils als Bürsten-Hohlwellen-Motor, insbesondere als Gleichspannungsgetriebe-Motor ausgebildet ist.

13. Testrohr nach Anspruch 12, **dadurch gekennzeichnet, daß** für die jeweilige winkelkonforme Steuerung an den betreffenden Stellmotor (M1,M2) ein Incrementalencoder angeflanscht ist.

14. Testrohr nach einem oder mehreren der Ansprüche 1 bis 13, **dadurch gekennzeichnet, daß** der erste Stellmotor (M 1), der für die rotatorische Sondenverstellung verantwortlich ist, seine Antriebsleistung über einen Rotor (R1) auf das Untersetzungsgetriebe am Gehäuse (32) überträgt, wobei die Abtriebsseite des Untersetzungsgetriebes von der flanschartigen Abtriebsplatte (FL1) bereitgestellt ist, auf die das Hubgehäuse (33) mit dem translatorischen Antriebssystem flanschartig (FL2) aufgeschraubt ist.

15. Testrohr nach einem oder mehreren der Ansprüche 1 bis 14, **dadurch gekennzeichnet, daß** der zweite Stellmotor (M2) direkt eine koaxiale, hohlzylindrische Gewinderollen-Spindel (38) antreibt, die über mindestens eine kugelartige Drehlagerung (39) an Innenteilen des Hubgehäuses (33) drehbar abgestützt und/oder gehalten ist, wobei eine auf der Spindel (38) sitzende Kugelmutter (40) linear verstellbar geführt ist und einen Führungsschlitten für ein Hubrohr (42) ausbildet, an dem die Meßsonde (3) außen am Verstellgerät (2) fixiert ist.

16. Testrohr nach Anspruch 15, **dadurch gekennzeichnet, daß** der Führungsschlitten linear längs Führungswellen (41) beweglich geführt ist.

17. Testrohr nach Anspruch 15 oder 16, **dadurch gekennzeichnet, daß** für die lineare Schlittenführung Präzisionskugelbüchsen vorgesehen sind.

18. Testrohr nach einem oder mehreren der Ansprüche 1 bis 14, **dadurch gekennzeichnet, daß** der zweite Stellmotor (M2) direkt eine an Innenteilen des Hubgehäuses (33) drehbar gelagerte Spindelmutter antreibt, wobei die Mutterverstellung in eine lineare Verstellung einer Kugelrollspindel umgesetzt wird, die hubrohrartig (42) mit der Meßsonde (3) verbunden bzw. verbindbar ist.

19. Testrohr nach Anspruch 15 oder 18, **dadurch gekennzeichnet, daß** axial außen am Hubrohr (42) die Meßsonde (3) über einen Spannzangenkopf (43) fixierbar ist, wobei ein Hubrohr-Lagerdeckel (44) am Hubgehäuse (33) lösbar verankert ist.

20. Testrohr nach einem oder mehreren der Ansprüche 1 bis 19, **dadurch gekennzeichnet, daß** das der Umfangsstelle (S) des Testrohrs (1) nächstliegende Fußgehäuseteil (30) des Verstellgeräts (2) durch ein Kühlfluid kühlbar ist.

21. Testrohr nach Anspruch 20, **dadurch gekennzeichnet, daß** die Einschaltung der Kühlung als Funktion einer gemessenen örtlichen Umgebungstemperatur über einen Thermoschalter und/oder über das Steuergerät (21) erfolgt.

22. Testroht nach Anspruch 20, **dadurch gekennzeichnet, daß** das Fußgehäuseteil (30) Kühlkanäle aufweist, durch die das Kühlfluid pumpengefördert zirkuliert, das über einen Wärmetauscher geführt ist, mit dem das durch Bauteilkühlung erwärmte Kühlfluid abgekühlt wird.

23. Testrohr nach einem oder mehreren der Ansprüche 1 bis 22, **dadurch gekennzeichnet, daß** das Fußgehäuseteil (30) des Verstellgeräts (2) mittels einer durch Schraubverbindung lockerbaren bzw. lösbaren Klemme am Umfang relativ zur Position eines Geräte- bzw. Befestigungsflansches (35) des Verstellgeräts (2) verdrehbar und justierbar ist.

24. Testrohr nach einem oder mehreren der Ansprüche 1 bis 23, **dadurch gekennzeichnet, daß** das Verstellgerät (2) am Umfang des Testrohrs (1) in einer relativ zur Längsachse (L) desselben umfänglichen Bewegung (Z - Fig. 2) verstellbar angeordnet ist, wobei diese Verstellung motorisch als Funktion des in den Rechner (27) implantierten Steuerprogramms über das Steuergerät (21) erfolgt.

25. Testrohr nach Anspruch 1, **dadurch gekennzeichnet, daß** ein zylindrisches Gehäuse eines Verdichters oder einer Turbine bzw. ein Strahlrohr eines Gasturbinentriebwerkes das Testrohr (1) bildet.

## Claims

1. Test duct (1) with a measurement probe (3) that can be adjusted accurately to the measurement position and direction of the fluid flow (F) passing through the test duct
(1) and which has in particular a sensor head (10) angled transversely away from the probe axis (A), comprising:
I. a displacement mechanism (2) by means of which the measurement probe (3) arranged coaxially can be adjusted by a first positioning motor (M1) around its axis (A), by a second positioning motor (M2) in the direction of its axis (A), and which is mounted with a flange (35) on a matching external mounting seat (S) at the periphery of the test duct (1) in such manner that the extension of the common longitudinal axis (A) of the displacement mechanism (2) and the measurement probe (3) intersects the axis (L) of the test duct at a right-angle (Re) and inclined at an angle (γ) relative to a vertical longitudinal middle plane (E) of the test duct (1),
II. an adjustment device (4) coupled to rotate with the measurement probe (3), having a rotatably mounted pendulum (6) for the definition of the null position (N, M), i.e. the nominal position and direction of the measurement probe (3), such that
a) the adjustment device (4) and its housing (5) have a defined angular position relative to the probe axis (A),
b) the sensor head (10) has a defined angular position relative to the probe axis (A) and the adjustment device (4), and
c) under the effect of gravity, the pendulum (6) adopts a nominal position relative to the housing (5) of the adjustment device (4), in the middle between its limit positions (G1, G2),
and
III. a control unit (21) that communicates with an electronic computer (27) for the displacement of the probe, constructed such that during an adjustment process the measurement probe (3) is rotated about its own axis (A) in both directions until the pendulum reaches either of two limit positions (G1, G2) relative to the adjustment device (4) that correspond to a defined deviation of the pendulum (6) from a middle or null position (N, M), arrival at which is detected by optical means, and the computer (27) then mathematically bisects the so determined angular displacement path between the limit points (G1, G2) and the measurement probe (3) is rotated from one limit point (G1 or G2) about its axis (A) through the angular value so calculated until it reaches an angular position in which the pendulum (6) is located at its reference position (N, M) exactly half-way between the limit points (G1, G2), i.e. the adjustment device (4) has been brought to a defined position relative to a vertical reference plane, whereby a defined position of the measurement probe (3) relative to the longitudinal axis (L) of the test duct (1) is also reached.

2. Test duct according to Claim 1,
**characterised in that**
the adjustment device (4) can be attached in a rotationally fixed position on a section or directing head of the measurement probe (3) projecting upwards out of the displacement mechanism (2), by means of a plug-in fixture.

3. Test duct according to Claims 1 or 2,
**characterised in that**
the rotation axis (8) of the pendulum (6) coincides with the common longitudinal axis (A) or is inclined outwards relative to the said axis (A) by an angle (β).

4. Test duct according to one or more of Claims 1 to 3,
**characterised in that**
the sensor head (10) angled transversely away from the measurement probe (3) is arranged in a position rotated by 90° about the probe axis (A) relative to the middle of the length of the adjustment device (4).

5. Test duct according to one or more of Claims 1 to 4,
**characterised in that**
the free outer end of the pendulum (6) forms a light screen (9), in particular a light coupler opposite a slit (9') in the housing of the adjustment device (4), whereby relative to the limit positions (G1, G2) of the pendulum light signals are produced, which are processed into logic signals.

6. Test duct according to one or more of Claims 1 to 5,
**characterised in that**
the housing (5) of the adjustment device (4) tapers in the direction towards its end containing the light screen (9), in particular in a symmetrical wedge shape as seen from above, and comprises a detachable outer housing cover and bridging elements (11) opposite one another and a distance apart, on or between which the rotation bearing (7) for the pendulum (6) is formed and which are screwed detachably to the housing (5).

7. Test duct according to Claim 5,
**characterised in that**
in combination with a light coupler, an integrated circuit (12) is provided as a component essentially in the housing (5) of the adjustment device (4), by means of which the limit positions (G1 or G2) of the pendulum can be converted into logical signals essentially by virtue of an electrical resistor (13), a universal transistor (14) and a light-emitting diode (15 - LED) when an appropriate current source (DC) is connected, and reference cables (16, 17) from the circuit (12) are connected to the motor control concerned via Souriau plugs and plug sockets on the base housing (30) of the displacement mechanism (2).

8. Test duct according to one or more of Claims 1 to 7,
**characterised in that**
further reference cables (28, 29), in particular for the translational or rotational movement control (T, R) of the measurement probe (3), run from the control unit (21) with the computer (27) out of a screened operation area (20) to the test area (19), and are there anchored via Souriau plugs and sockets to the base housing (30) of the displacement mechanism (2), from which they extend from corresponding conduits on the instrument side to the motor controls concerned.

9. Test duct according to one or more of Claims 1 to 8,
**characterised in that**
the displacement mechanism (2) consists of several module-like housings (30, 31, 32, 33) which can be detached from one another and exchanged by screw connections (St), one of these housings (31), which sits on the base housing (30), accommodating essentially the positioning motor (M1) for the rotational positioning of the probe and another housing (32) on it accommodating essentially a speed reduction gear for the first positioning motor (M1), and in which, by means of a flange portion (FL1) of the reduction gear, a lifting housing (33) is screwed in addition to internal components of this housing, and the lifting housing (33), besides internal components, also contains and at least in part forms the second positioning motor (M2) and displacement means for the translational movement (T) of the probe.

10. Test duct according to one or more of Claims 1 to 9,
**characterised in that**
the drive and displacement means are all formed in a hollow cylindrical manner in the circumferential area of the displacement mechanism (2) adjacent to the measurement probe (3), to allow unimpeded probe displacement and rotation.

11. Test duct according to one or more of Claims 1 to 10,
**characterised in that**
the housings of the displacement mechanism (2) are each at least in part made from a strong, light material, in particular titanium or a titanium alloy or a composite material reinforced with fibres, in particular glass fibres.

12. Test duct according to one or more of Claims 1 to 11,
**characterised in that**
the first and second positioning motors (M1, M2) are each formed as brush/hollowshaft motors, in particular as direct voltage drive motors.

13. Test duct according to Claim 12,
**characterised in that**
an incremental coder is attached on the positioning motor (M1, M2) concerned in each case, for the respective angle-conformal control.

14. Test duct according to one or more of Claims 1 to 13,
**characterised in that**
the first positioning motor (M1), which is responsible for the rotational positioning of the probe, transmits drive power to the step-down gear on the housing (32) via a rotor (R1), and the output side of the step-down gear is formed by the flange-like output plate (FL1) onto which the lifting housing (33) with the translational drive system is screwed as a flange (FL2).

15. Test duct according to one or more of Claims 1 to 14,
**characterised in that**
the second positioning motor (M2) directly drives a coaxial, hollow-cylindrical threaded roll spindle (38) which is supported and/or held so that it can rotate on at least one ball-type rotation bearing (39) on inside portions of the lifting housing (3), such that a ball nut (40) fitted on the spindle (38) is guided and displaced linearly and forms a guiding carriage for a lifting tube (42) to which the measurement probe (3) is fixed on the outside of the displacement mechanism (2).

16. Test duct according to Claim 15,
**characterised in that**
the guiding carriage travels linearly along guide shafts (41).

17. Test duct according to Claims 15 or 16,
**characterised in that**
high-precision ball boxes are provided for the linear guiding of the carriage.

18. Test duct according to one or more of Claims 15 or 18,
**characterised in that**
the second positioning motor (M2) directly drives a spindle nut fitted to rotate on internal components of the lifting housing (33), the nut displacement being converted into a linear displacement of a ball roller spindle which is or can be connected as a lifting tube (42) to the measurement probe (3).

19. Test duct according to Claims 15 or 18,
**characterised in that**
the measurement probe (3) can be fixed axially outside on the lifting tube (42) by means of a gripping collet head (43), and a lifting tube bearing cover (44) is detachably fixed on the lifting housing (33).

20. Test duct according to Claims 1 to 19,
**characterised in that**
the base housing component (30) of the displacement mechanism (2) adjacent to the peripheral mounting point (S) of the test duct (1) can be cooled by a cooling fluid.

21. Test duct according to Claim 20,
**characterised in that**
the cooling is turned on as a function of a measured local ambient temperature by means of a thermal switch and/or by the control unit (21).

22. Test duct according to Claim 20,
**characterised in that**
the base housing component (30) has cooling channels through which the cooling fluid is pumped and circulates, the fluid passing through a heat exchanger by which the cooling fluid heated by cooling the component is itself cooled.

23. Test duct according to one or more of Claims 1 to 22,
**characterised in that**
the base housing component (30) of the displacement mechanism (2) can be rotated and adjusted relative to the position of an instrument or attachment flange (35) of the displacement mechanism (2), by means of a clamp at the circumference which can be loosened or detached by screw connections.

24. Test duct according to one or more of Claims 1 to 23,
**characterised in that**
the displacement mechanism (2) is arranged at the periphery of the test duct (1) so that it can be moved circumferentially (Z - Fig. 2) relative to the longitudinal axis (L) thereof, this movement being effected by the control unit (21) as a function of the control program loaded into the computer (27).

25. Test duct according to Claim 1,
**characterised in that**
the test duct (1) is formed by a cylindrical housing of a compressor or a turbine, or a radiation tube of a gas turbine engine.

## Revendications

1. Tube à test (1) présentant une sonde de mesure (3) qui peut se déplacer pour venir exactement sur le lieu de mesure et selon la direction de l'écoulement (F) du fluide qui passe dans le tube à test (1) et qui présente en particulier une tête de sonde (10) formant un angle avec l'axe (A) de la sonde, comportant :
I. un appareil de déplacement (2) avec lequel la sonde de mesure (3) peut se déplacer, coaxialement à elle-même, au moyen d'un premier moteur réglant (M1), autour de son axe (A) et, au moyen d'un second moteur réglant (M2), selon la direction de son axe (A), et qui est monté, par un flasque (35), en une position périphérique extérieure adaptée (S) du tube à test (1) de façon que l'axe longitudinal commun (A) de l'appareil de déplacement (2) et de la sonde de mesure (3) coupe, par son prolongement, l'axe (L) du tube à test sous un angle droit (Re) en formant un angle (γ) avec un plan axial longitudinal vertical (E) du tube à test (1),
II. un appareil d'ajustement (4) couplé, sans liberté de rotation relative, avec la sonde de mesure (3) et comportant un pendule (6), porté avec liberté de rotation, pour définir la position nulle (N, M), c'est-à-dire la position et la direction prescrites de la sonde de mesure (3), dans lequel
a) l'appareil d'ajustement (4) ou son enveloppe (5) présente une position angulaire définie par rapport à l'axe (A) de la sonde,
b) la tête de sonde (10) présente une position angulaire définie par rapport à l'axe (A) de la sonde et par rapport à l'appareil d'ajustement (4), et
c) le pendule (6) prend, sous l'influence de la pesanteur, par rapport à l'enveloppe (5) de l'appareil d'ajustement (4), une position prescrite, au milieu, entre ses positions limites (G1, G2), et
III. un appareil de commande (21), communiquant avec un calculateur électronique (27), pour le déplacement de la sonde, qui est conçu de façon que, dans le cadre d'un processus d'ajustement, la sonde de mesure (3) soit entraînée en rotation autour de son propre axe (A), dans les deux sens, jusqu'à ce que soit atteint, par rapport à l'appareil d'ajustement (4), un point limite respectif (G1, G2) de la position angulaire qui corresponde à un écart défini du pendule (6) par rapport à une position médiane ou nulle (N, M) et dont le fait de l'atteindre soit déterminé par des moyens optiques, qu'en outre le calculateur (27) divise mathématiquement par deux le parcours angulaire, ainsi déterminé, entre les points limites (G1, G2), et que la sonde de mesure (3), en partant d'un point limite (G1 ou G2), soit entraînée en rotation autour de son axe (A), de la valeur angulaire ainsi calculée, de façon que la sonde de mesure atteigne une position angulaire dans laquelle le pendule (6) se situe à sa position de référence (N, M), exactement au milieu entre les points limites (G1, G2), c'est-à-dire que l'appareil d'ajustement (4) soit amené dans une position définie par rapport à un plan de référence vertical, ce par quoi une position définie de la sonde de mesure (3) par rapport à l'axe longitudinal (L) du tube à test (1) est également atteinte.

2. Tube à test selon la revendication 1, **caractérisé par le fait que** l'appareil d'ajustement (4) peut, au moyen d'une fiche, se fixer, sans liberté de rotation relative, sur un embout, ou tête d'orientation de la sonde de mesure (3), saillant hors de l'appareil de déplacement (2).

3. Tube à test selon la revendication 1 ou 2, **caractérisé par le fait que** l'axe de rotation (8) du pendule (6) se situe sur l'axe longitudinal commun (A) ou est incliné vers l'extérieur, sous un angle (β), par rapport à cet axe (A).

4. Tube à test selon une ou plusieurs des revendications 1 à 3, **caractérisé par le fait que** la tête de sonde (10), qui forme transversalement un angle avec la sonde de mesure (3), est disposée dans une position ayant tourné de 90° autour de l'axe (A) de la sonde par rapport à l'axe longitudinal de l'appareil d'ajustement (4).

5. Tube à test selon une ou plusieurs des revendications 1 à 4, **caractérisé par le fait que** l'extrémité extérieure libre du pendule (6) forme, en face d'une fente associée (9'), prévue sur l'enveloppe (5) de l'appareil d'ajustement (4), une barrière lumineuse (9), en particulier un coupleur optique, ce par quoi peuvent être produits, par rapport aux positions limites du pendule (G1, G2), des signaux optiques qui sont traités pour donner des signaux logiques.

6. Tube à test selon une ou plusieurs des revendications 1 à 5, **caractérisé par le fait que** l'enveloppe (5) de l'appareil d'ajustement (4) est conçue allant en diminuant en forme de coin, en particulier en forme de coin symétrique en vue de face, en direction de l'extrémité contenant la barrière optique (9) et présente un couvercle extérieur, détachable, de l'enveloppe ainsi que des éléments de pontage qui sont situés l'un au-dessus de l'autre, à distance l'un de l'autre, sur lesquels ou entre lesquels est formée la portée tournante (7) pour le pendule (6) et qui sont vissés, de façon amovible, avec l'enveloppe (5).

7. Tube à test selon la revendication 5, **caractérisé par le fait qu'**en liaison avec un coupleur optique est prévu comme composant un circuit (12) qu est essentiellement intégré dans l'enveloppe (5) de l'appareil d'ajustement (4), et avec lequel les positions limites (G1 ou G2) du pendule peuvent être converties en signaux logiques essentiellement par l'intermédiaire d'une résistance électrique (13), d'un transistor universel (14) et d'une diode électroluminescente (15-LED) - une source de courant continu (DC) étant correctement raccordée, des câbles de référence (16, 17) partant du circuit (12) étant reliés par l'intermédiaire de fiches mâles Souriau et de fiches femelles, au niveau de l'enveloppe de pied (30) de l'appareil de déplacement (2), au circuit de commande du moteur en question.

8. Tube à test selon une ou plusieurs des revendications 1 à 7, **caractérisé par le fait que** d'autres câbles de référence (28, 29) prévus pour le circuit de commande en particulier du mouvement de translation ou du mouvement de rotation (T, R) de la sonde de mesure (3) par l'appareil de commande (21) avec le calculateur (27), vont, d'un espace de service (20) protégé par blindage, à l'espace de test (19) et y sont ancrés, par l'intermédiaire de fiches mâles Souriau et de fiches femelles, au niveau de l'enveloppe de pied (30) de l'appareil de déplacement (2) d'où des lignes d'arrivée appropriées, situées du côté appareil, vont aux circuits de commande du moteur concerné.

9. Tube à test selon une ou plusieurs des revendications 1 à 8, **caractérisé par le fait que** l'appareil de déplacement (2) est constitué de plusieurs enveloppes (30, 31, 32, 33) qui peuvent se détacher les unes des autres au moyen de liaisons par vis (St), de façon modulaire, et s'échanger, dont une enveloppe (31), qui a son assise sur l'enveloppe de pied (30), enclôt essentiellement le moteur réglant (M1) pour le déplacement rotatif de la sonde, une autre enveloppe (32) enclôt essentiellement, par dessus, un réducteur de la vitesse de rotation du premier moteur réglant (M1), et dans lequel une enveloppe de déplacement (33) est vissée avec des parties intérieures de cette autre enveloppe par un flasque (FL1), situé du côté sortie, du réducteur, dans lequel l'enveloppe de déplacement (33), en plus des parties intérieures, contient, et forme au moins partiellement, le second moteur réglant (M2) ainsi que de moyens de déplacement pour le déplacement de la sonde en translation (T).

10. Tube à test selon une ou plusieurs des revendications 1 à 9, **caractérisé par le fait que** dans les zones périphériques de l'appareil de déplacement (2) les plus proches de la sonde de mesure (3) les moyens d'entraînement et de déplacement sont, pour un déplacement et une rotation de la sonde sans obstacle, de forme entièrement cylindrique creuse.

11. Tube à test selon une ou plusieurs des revendications 1 à 10, **caractérisé par le fait que** les enveloppes de l'appareil de déplacement (2) sont chacune fabriquées au moins partiellement d'un matériau léger solide, en particulier de titane ou d'un alliage de titane ou d'un matériau composite armé de fibres, en particulier de fibres de verre.

12. Tube à test selon une ou plusieurs des revendications 1 à 11, **caractérisé par le fait que** le premier et le second moteurs réglants (M1, M2) sont chacun conçus sous forme de moteur à arbre creux à balais, en particulier sous forme de moto-réducteur à courant continu.

13. Tube à test selon la revendication 12, **caractérisé par le fait qu'**un codeur incrémentiel pour le circuit de commande, de forme angulaire, respectif, est fixé par bride, au moteur réglant concerné (M1, M2).

14. Tube à test selon une ou plusieurs des revendications 1 à 13, **caractérisé par le fait que** le premier moteur réglant (M1), responsable du déplacement de la sonde en rotation, transmet sa puissance d'entraînement, par l'intermédiaire d'un rotor (R1), au réducteur qui se trouve sur l'enveloppe (32), la face de sortie du réducteur étant formée par la plaque de sortie (FL1), du type flasque, sur laquelle l'enveloppe de déplacement (33) est vissée au système d'entraînement en translation par flasque (FL2).

15. Tube à test selon une ou plusieurs des revendications 1 à 14, **caractérisé par le fait que** le second moteur réglant (M2) entraîne directement une broche filetée à galets (38), coaxiale, cylindrique creuse, qui s'appuie et/ou est maintenue, avec liberté de rotation, par l'intermédiaire d'au moins une portée tournante de forme sphérique (39), contre des parties intérieures de l'enveloppe de déplacement (33), un écrou sphérique (40), vissé sur la broche (38), ayant un mouvement de déplacement linéaire et formant un chariot de guidage pour un tube de déplacement (42) sur lequel la sonde de mesure (3) est fixée à l'extérieur de l'appareil de déplacement (2).

16. Tube à test selon la revendication 15, **caractérisé par le fait que** le chariot de guidage est guidé avec liberté de mouvement linéaire le long de tubes de guidage (41).

17. Tube à test selon la revendication 15 ou 16, **caractérisé par le fait que** pour le guidage linéaire du chariot sont prévues des douilles sphériques de précision.

18. Tube à test selon une ou plusieurs des revendications 1 à 14, **caractérisé par le fait que** le second moteur réglant (M2) entraîne directement un écrou porté, avec liberté de rotation relative, sur des parties intérieures de l'enveloppe de déplacement (33), le déplacement de l'écrou étant converti en un déplacement linéaire d'une broche à galets sphériques qui est reliée, ou peut se relier, à la sonde de mesure (3) à la façon d'un tube de déplacement (42).

19. Tube à test selon la revendication 15 ou 18, **caractérisé par le fait que** la sonde de mesure (3) peut se fixer, selon la direction axiale, à l'extérieur du tube de déplacement (2) par l'intermédiaire d'une tête à mors (43), un couvercle (44) formant portée pour le tube de déplacement étant ancrée de façon amovible, sur l'enveloppe de déplacement (33).

20. Tube à test selon une ou plusieurs des revendications 1 à 19, **caractérisé par le fait que** la partie (30) de l'enveloppe de pied de l'appareil de déplacement (2) la plus proche de la partie périphérique (S) du tube à test (1) peut être refroidie par un fluide de refroidissement.

21. Tube à test selon la revendication 20, **caractérisé par le fait que** la mise en circuit du refroidissement se fait en fonction d'une température ambiante mesurée localement, par l'intermédiaire d'un thermostat et/ou par l'intermédiaire de l'appareil de commande (21).

22. Tube à test selon la revendication 20, **caractérisé par le fait que** la partie formant enveloppe de pied (30) présente des canaux de refroidissement dans lesquels circule, transporté par une pompe, le fluide de refroidissement qui passe par un échangeur de chaleur avec lequel est refroidi le fluide de refroidissement, qui s'est réchauffé en refroidissant les composants.

23. Tube à test selon une ou plusieurs des revendications 1 à 22 **caractérisé par le fait qu'**au moyen d'une pince que l'on peut verrouiller ou déverrouiller par une liaison par vis, on peut faire tourner et ajuster la partie formant enveloppe de pied (30) de l'appareil de déplacement (2), sur la périphérie, par rapport à la position d'un flasque d'appareil ou de fixation (35) de l'appareil de déplacement (2).

24. Tube à test selon une ou plusieurs des revendications 1 à 23, **caractérisé par le fait que** l'appareil de déplacement (2) est disposé sur la périphérie du tube à test (1) avec liberté de déplacement selon un mouvement périphérique (Z - figure 2) par rapport à son propre axe longitudinal (L), ce déplacement, motorisé, se faisant, par l'intermédiaire de l'appareil de commande (21), en fonction du programme de commande implanté dans le calculateur (27).

25. Tube à test selon la revendication 1, **caractérisé par le fait que** c'est une enveloppe cylindrique d'un compresseur ou d'une turbine ou un tubage d'un groupe moteur à turbine à gaz qui forme le tube à test (1).
